# EUROPÄISCHE PATENTANMELDUNG

(11) **EP 3 531 089 A1**
(43) Veröffentlichungstag der Anmeldung: **28.08.2019**
(21) Anmeldenummer: 18159028.2
(22) Anmeldetag: 27.02.2018
(51) Int. Cl.: G01G 23/10, G01G 11/04

(54) **VERFAHREN ZUR PRÜFUNG EINES SYSTEMS BESTEHEND AUS EINEM FÖRDERBAND ZUM TRANSPORT VON SCHÜTTGÜTERN UND EINER DEM FÖRDERBAND ZUGEORDNETEN BANDWAAGE**

(71) Anmelder: Wöhrl, Thomas, 74629 Pfedelbach (DE)
(72) Erfinder: Wöhrl, Thomas, 74629 Pfedelbach (DE)
(74) Vertreter: Patentanwaltskanzlei Vièl & Wieske PartGmbB

(57) **Zusammenfassung**

Die vorliegende Erfindung betrifft ein Verfahren zur Prüfung eines Systems bestehend aus einem Förderband zum Transport von Schüttgütern, einer dem Förderband zugeordneten Bandwaage sowie einer Ladestelle zum Laden des Förderbandes mit Schüttgütern sowie einer Entladestelle zum Entladen der Schüttgüter von dem Förderband, wobei eine Prüfung des Betriebszustandes des Förderbandes erfolgt. Nach der vorliegenden Erfindung erfolgt eine Auswertung des Signals der Bandwaage im Hinblick auf Schwingungen im Signal der Bandwaage.

## Beschreibung

Die vorliegende Erfindung betrifft ein Verfahren zur Prüfung eines Systems bestehend aus einem Förderband zum Transport von Schüttgütern und einer dem Förderband zugeordneten Bandwaage nach dem Oberbegriff des Anspruchs 1.

Das System weist weiterhin noch wenigstens eine Ladestelle auf zum Laden des Förderbandes mit Schüttgütern sowie wenigstens eine Entladestelle zum Entladen der Schüttgüter von dem Förderband.

Mit einer dem Förderband zugeordneten Bandwaage besteht die Möglichkeit, die transportierte Menge an Material in Form einer Fördermenge - beispielsweise Tonnen pro Stunde - zu messen. Die Bandwaage weist beispielsweise einen Biegestab oder eine sogenannte Single-Point-Messzelle auf, vorzugsweise mit einem Wägeterminal an oder außerhalb der Bandwaage.

Zur Prüfung des Betriebszustandes des Förderbandes ist es bekannt und üblich, an dem Förderband ein Tachorad anzubringen. Mit einem solchen Tachorad kann kontrolliert werden, ob das Förderband in Bewegung ist oder steht. Mit dem Tachorad kann auch die Geschwindigkeit des Förderbandes gemessen werden.

Aus dem Signal der Bandwaage und der Geschwindigkeit des Förderbandes kann eine Fördermenge in einem bestimmten Zeitabschnitt ermittelt werden. Damit wird es beispielsweise möglich, bei Erreichen einer bestimmten Fördermenge das System abzuschalten.

Der vorliegenden Erfindung liegt die Aufgabe zu Grunde, die Prüfung des Systems zu vereinfachen.

Diese Aufgabe wird nach der vorliegenden Erfindung gemäß Anspruch 1 gelöst, indem eine Auswertung des Signals der Bandwaage im Hinblick auf Schwingungen im Signal der Bandwaage erfolgt.

Vorteilhaft wird bei dieser Vorgehensweise von der Erkenntnis Gebrauch gemacht, dass sich Schwingungen im Signal der Bandwaage einstellen. Es zeigt sich, dass die Schwingungen unterschiedlich sind, abhängig davon, ob das Förderband in Bewegung ist oder nicht.

Mit diesen Schwingungen ist im Sinne der vorliegenden Erfindung nicht gemeint, dass sich das Signal der Bandwaage bei einer "Betrachtung im Gleichgewichtszustand" ändert, wenn das Schüttgut auf das Förderband fällt. Wenn durch das "hinzukommende" Schüttgut die Gesamtmenge des Schüttgutes auf dem Förderband in dem Bereich ansteigt, in dem das Gewicht dieses Schüttgutes durch die Bandwaage erfasst wird, ist dies mit einem Anstieg des Signals der Bandwaage verbunden, weil im entsprechenden Umfang das Gewicht des Schüttgutes im Messbereich zunimmt. Dieser Anstieg auf Grund der Zunahme des gemessenen Gewichts betrifft einen Signalanstieg, der dem Gleichgewichtszustand zuzuordnen ist. Bei der vorliegenden Erfindung sollen die Schwingungen im Signal der Bandwaage ausgewertet werden, die darauf zurückzuführen sind, dass das Förderband in Schwingungen versetzt wird. Diese Schwingungen beruhen daraus, dass Anlagenteile des Systems im laufenden Betrieb Schwingungen aufweisen, die auch auf das Förderband übertragen werden und dazu führen, dass auch das Förderband schwingt.

Diese Schwingungen weisen bei laufendem Förderband einen signifikanten Anteil in einem höherfrequenten Spektrum auf. Bei stehendem Förderband kann es im Signal der Bandwaage auch zu Schwingungen kommen auf Grund von Schwingungen von Anlagenteilen, die mit dem Förderband in mechanischer Weise verbunden sind. Es hat sich jedoch gezeigt, dass diese Schwingungen in dem höherfrequenten Spektrum niedrigere Amplituden aufweisen als die Schwingungen bei laufendem Förderband. Auch wenn das Förderband steht und nicht in Betrieb ist, können weitere Anlagenteile des Systems weiterhin in Betrieb sein. Der Betrieb dieser Anlagenteile führt dazu, dass das Förderband auch dann Schwingungen aufweist, wenn das Förderband steht.

Diese Schwingungen bewirken, dass das Förderband auch im Messbereich der Bandwaage schwingt. Dies zeigt sich dann auch im Signal der Bandwaage in Form von Schwingungen des Signals.

Durch eine Auswertung dieses Signals - insbesondere des Anteils der Schwingungen in dem Signal, die höherfrequent sind - lässt sich damit eine Aussage über den Betriebszustand des Förderbandes machen.

Es wird damit zumindest in den meisten Fällen möglich, eine Aussage zu treffen, ob das Förderband steht oder in Bewegung ist.

Abhängig von den Betriebsbedingungen ist es unter Umständen auch möglich, bei einer erkannten Bewegung des Förderbandes eine Aussage über das Geschwindigkeitsniveau zu machen.

Vorteilhaft ist bei dieser Auswertung, dass das Tachorad entfallen kann, wenn die Auswertung der Signale der Bandwaage eine ausreichende Genauigkeit liefert über den Betriebszustand des Förderbandes.

Es gibt Betriebsbedingungen, bei denen für das Förderband lediglich zu unterscheiden ist, ob es eingeschaltet ist oder nicht. Es erfolgt dabei keine weitere Regelung der Geschwindigkeit. In diesen Fällen ist es vielfach möglich, durch die Auswertung des Schwingungsverhaltens aus dem Signalverlauf des Signals der Bandwaage eine entsprechende Aussage zu treffen, ob das Förderband in Bewegung ist oder nicht.

Bei der Ausgestaltung des Verfahrens nach Anspruch 2 wird die Amplitude der Signalschwingungen in einem Zeitfenster in einem Frequenzbereich ausgewertet derart, dass bei Überschreiten eines Grenzwertes der Amplitude der Signalschwingung in dem Frequenzbereich abgeleitet wird, dass das Förderband läuft und dass bei Unterschreiten des Grenzwertes der Amplitude abgeleitet wird, dass das Förderband steht.

Es hat sich gezeigt, dass die Amplituden der Schwingungen im Signal in dem höherfrequenten Bereich unterschiedlich sind abhängig davon, ob das Förderband steht oder läuft. Die Amplituden im Signal sind größer, wenn das Förderband in Bewegung ist.

Deswegen wird vorteilhaft ein Grenzwert der Amplitude in dem relevanten Frequenzbereich definiert, bei dessen Überschreiten erkannt wird, dass das Förderband in Bewegung ist und bei dessen Unterschreiten erkannt wird, dass das Förderband steht.

Die Amplitude des Signals in dem höherfrequenten Bereich wird zu einem bestimmten Zeitpunkt erkannt als Abweichung des tatsächlichen Signals der Bandwaage von einem Wert dieses Signals zu dem bestimmten Zeitpunkt, der statisch konstant ist oder der sich auf Grund niederfrequenter Schwingungen im Signalverlauf für diesen Zeitpunkt ergibt.

Bei der Ausgestaltung des Verfahrens nach Anspruch 3 wird ein Leistungsdichtespektrum in einem Zeitfenster aufgenommen. Die Leistungsdichte wird in einem Frequenzbereich ausgewertet, in dem Schwingungen des Förderbandes auftreten. Bei Überschreiten eines Schwellwertes der Leistungsdichte in diesem Frequenzbereich wird erkannt, dass das Förderband läuft und bei Unterschreiten dieses Schwellwertes wird erkannt, dass das Förderband steht.

Anspruch 3 betrifft die Auswertung derselben physikalischen Effekte wie bei der Ausgestaltung nach Anspruch 2.

Bei der Ausgestaltung nach Anspruch 3 kann durch die Auswertung des Leistungsdichtespektrums in einfacher Weise der Leistungsinhalt des Signals in den einzelnen Frequenzbereichen ausgewertet und bewertet werden. Durch die Auswertung der Leistungsdichte gerade in dem interessierenden höherfrequenten Bereich wird es in einfacher Weise möglich, zu erkennen, ob das Förderband steht oder läuft - und ggf. auch eine Aussage über die Geschwindigkeit zu machen, mit der das Förderband läuft.

Bei der Ausgestaltung nach Anspruch 4 wird für ein bestimmtes System eine Kalibrierung vorgenommen, indem ein Signalverlauf des Signals der Bandwaage bei stehendem Förderband des Systems aufgenommen wird und indem ein Signalverlauf des Signals der Bandwaage bei laufendem Förderband des Systems aufgenommen wird.

Im daran anschließenden laufenden Betrieb kann ein Vergleich des gemessenen Signalverlaufs mit den beiden gespeicherten Signalverläufen erfolgen.

Diese Vorgehensweise bei der Kalibrierung bietet den weiteren Vorteil, dass auch Fremdschwingungen durch zusätzlich angebaute Geräte mit berücksichtigt werden.

Es lassen sich mit dieser Vorgehensweise der Frequenzbereich und das Frequenzband der Schwingungen bestimmen, die auf die Übertragung der Schwingungen durch das Förderband zurückzuführen sind. Die Amplituden bzw. die Leistungsdichte in dem Frequenzband hängen davon ab, ob das Förderband steht oder läuft.

Bei der Ausgestaltung des Verfahrens nach Anspruch 5 wird der Grenzwert der Amplitude und / oder der Schwellwert der Leistungsdichte abhängig von der ermittelten Amplitude und / oder der ermittelten Leistungsdichte bei stehendem Förderband sowie abhängig von der ermittelten Amplitude und / oder der ermittelten Leistungsdichte bei laufendem Förderband festgelegt.

Zeigt sich hierbei, dass sich bei einem bestimmten System bzw. auch bei bestimmten Betriebsbedingungen hinsichtlich der Beladung des Förderbandes die Amplituden und / oder die Leistungsdichten in dem interessierenden höherfrequenten Bereich in ihren Werten bei stehendem Förderband und bei laufendem Förderband überschneiden, kann bei der Kalibrierung des Systems eine Anzeige erfolgen, nach der dem Benutzer empfohlen wird, ein an sich bekanntes Tachorad zu installieren, um in konventioneller Weise zu messen, ob das Förderband läuft oder nicht.

Wenn die Werte der Amplituden bei einem laufenden Förderband gegenüber den Werten der Amplituden bei einem stehenden Förderband in dem interessierenden Frequenzbereich einen ausreichenden Abstand aufweisen, kann der Grenzwert so festgelegt werden, dass er "in diesem Abstand liegt".

Wenn die Werte der Leistungsdichten bei einem laufenden Förderband gegenüber den Werten der Leistungsdichten bei einem stehenden Förderband in dem interessierenden Frequenzbereich einen ausreichenden Abstand aufweisen, kann der Schwellwert so festgelegt werden, dass er "in diesem Abstand liegt".

Wie beschrieben können die Vergleichswerte für die Schwingungen bei stehendem und bei laufendem Förderband weiterhin parametriert werden über die Beladung des Förderbandes. Bei einer Beladung des Förderbandes stellt sich ein anderes Schwingungsverhalten des Förderbandes ein als bei einem unbeladenen Förderband. Vorteilhaft werden daher die Referenzwerte (Grenzwerte bzw. Schwellwerte) für die Unterscheidung zwischen einem stehendem Förderband und einem laufenden Förderband weiterhin in Abhängigkeit von dem Beladungszustand des Förderbandes ermittelt. Für den laufenden Betrieb des Systems ist es unproblematisch, die Messung des Signals der Bandwaage bei stehenden Förderband durchzuführen, wenn das Förderband leer ist. Für den Betriebszustand "leeres Förderband" kann daher in einfacher Weise sowohl die Referenzmessung bei stehendem Förderband sowie auch bei laufendem Förderband vorgenommen werden. Bei beladenem Förderband kann es für die Betriebsbedingungen der Anlage problematisch sein, das Förderband anzuhalten. Dies hängt damit zusammen, dass es - abhängig von der Konfiguration der Anlage - u. U. notwendig ist, die Anlage leer zu fahren, um wieder einen definierten Betriebszustand zu erreichen. Ein Anhalten eines beladenen Förderbandes ist vergleichbar der Betätigung eines Notausschalters der Anlage. Wenn die beschriebenen Referenzwerte jedoch bei unterschiedlichen Beladungszuständen des Förderbandes sowohl für das stehende Förderband als auch für das laufende Förderband aufgenommen werden, ist es u. U. möglich, im laufenden Betrieb bei der Auswertung den momentanen Beladungszustand des Förderbandes zu berücksichtigen, um den Grenzwert bzw. den Schwellwert an den Beladungszustand anzupassen entsprechend den zuvor ermittelten Werten bei der Kalibrierung nach den Ansprüchen 4 und / oder 5, die dann unter weiterer Berücksichtigung des Beladungszustandes des Förderbandes erfolgt ist.

Bei der Ausgestaltung des Verfahrens nach Anspruch 6 wird aus dem Signalverlauf des Signals der Bandwaage auf die Fördergeschwindigkeit des Förderbandes geschlossen.

Sofern sich bei dem System eine ausreichend große Veränderung der sich einstellenden Amplitude und / oder der sich ergebenden Leistungsdichte des Signals in dem interessierenden Frequenzbereich ergibt bei sich ändernder Geschwindigkeit des Förderbandes, lässt sich darüber eine Auswertung durchführen über die Geschwindigkeit des Förderbandes. Gegebenenfalls lässt sich auch eine Aussage machen über bestimmte Geschwindigkeitsbereiche.

Ein Ausführungsbeispiel der Erfindung ist in der Zeichnung dargestellt. Es zeigt dabei:
- Fig. 1:: eine Darstellung einer Bandwaage,
- Fig. 2:: eine Darstellung des Signalverlaufs der Bandwaage und
- Fig. 3:: eine Prinzipdarstellung eines Förderbandes mit einer Ladestelle und einer Bandwaage.

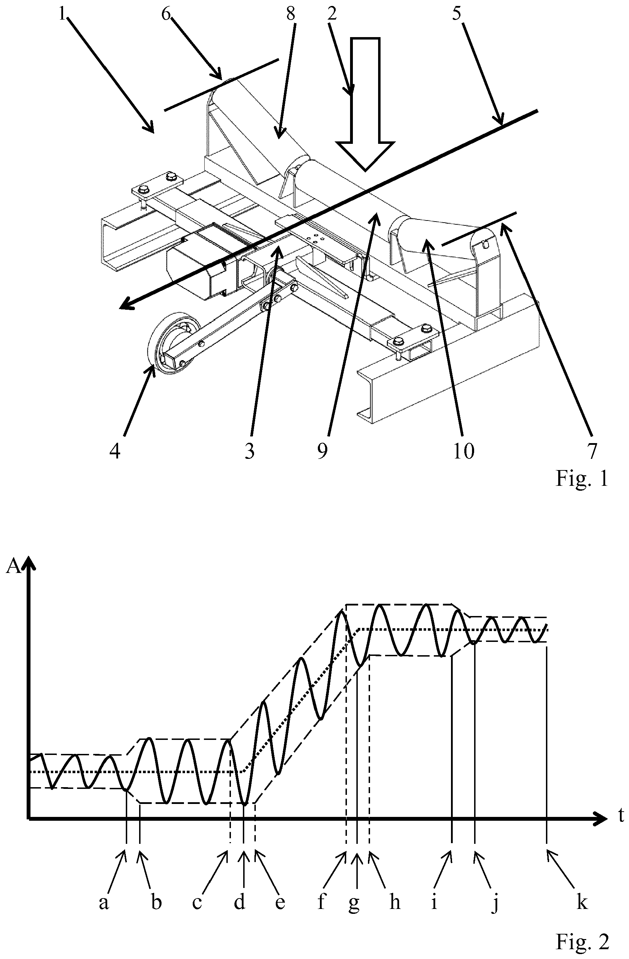

Figur 1 zeigt eine Darstellung einer Bandwaage 1. Es ist ein Pfeil 2 zu sehen, der eine Gewichtsbelastung eines Förderbandes symbolisiert, das in einem Teilbereich der Länge des Förderbandes auf der Bandwaage 1 aufliegt und über die Bandwaage 1 abgestützt ist. Das Förderband selbst ist hier nicht dargestellt. Das Förderband läuft in Richtung des Pfeils 5 und erstreckt sich in einer Breite zwischen den dargestellten Markierungen 6 und 7.

Das Förderband drückt dabei durch sein Gewicht auf die Teilbereiche 8, 9 und 10 der Bandwaage. Diese Gewichtsbelastung wird durch den Biegestab 3 erfasst.

Die Verformung des Biegestabes 3 kann beispielsweise mittels Dehnmessstreifen erfasst werden. Das Ausgangssignal dieser Dehnmessstreifen bildet dann das Ausgangssignal der Bandwaage 1, das ausgewertet und bewertet werden kann.

In der Darstellung der Figur 1 ist noch ein Tachorad 4 zu sehen. Wenn das Förderband über dieses Tachorad 4 läuft, kann aus der Drehgeschwindigkeit dieses Tachorades 4 abgeleitet werden, ob das Förderband läuft oder steht. Es ist auch möglich, über die Drehgeschwindigkeit des Tachorades 4 die Geschwindigkeit des Förderbandes abzuleiten.

Ziel der vorliegenden Erfindung ist es, durch eine Auswertung des Signals der Bandwaage 1 zu ermitteln, ob das Förderband läuft oder steht - und ggf. auch den Geschwindigkeitsbereich einzugrenzen. Dadurch kann eine Redundanz geschaffen werden zu dem Signal des Tachorades 4. Wenn die Genauigkeit des Ergebnisses der Auswertung des Signals der Bandwaage ausreichend ist hinsichtlich der Bewertung des Betriebszustandes "Läuft" / "Steht" des Förderbandes bzw. der Geschwindigkeit des Förderbandes, kann das Tachorad 4 ggf. auch entfallen.

Figur 2 zeigt eine Darstellung des Signalverlaufs der Bandwaage.

Der Mittelwert des dargestellten schwingenden Signals repräsentiert das Gewicht des Förderbandes selbst sowie des darauf aufliegenden Schüttgutes.

Dieser Mittelwert ist in der Darstellung der Figur 2 als punktierte Linie dargestellt, die ausgehend vom Zeitpunkt t=0 bis zum Zeitpunkt t=d horizontal verläuft. In diesem Zeitbereich ist das Förderband leer.

Daran anschließend (beginnend mit dem Zeitpunkt t=d) steigt der Mittelwert des Gewichtes, das durch die Bandwaage gemessen wird, an bis zum Zeitpunkt t=g.

Dies bedeutet, dass (bei laufender Bandwaage) zwischen den Zeitpunkten t=d und t=g Schüttgut auf das Förderband fällt, so dass das gemessene Gewicht ansteigt.

Ab dem Zeitpunkt t=g ist der Mittelwert wieder konstant bis zum Ende der Messung zum Zeitpunkt t=k. Dies bedeutet, dass sich in diesem Zeitintervall das gemessene Gewicht nicht ändert. Da das gemessene Gewicht in diesem Zeitabschnitt t=g bis t=k auf einem höheren Niveau liegt als im Zeitabschnitt zwischen t=0 und t=d, bedeutet dies, dass das Förderband im Zeitabschnitt zwischen t=g und t=k beladen ist.

Der Anstieg zwischen den Zeitpunkten t=d und t=g bedeutet, dass beginnend bei t=d der Teil des Förderbandes in den Erfassungsbereich der Bandwaage einläuft, der mit Schüttgut beladen ist. Dadurch wird der Bereich des Förderbandes, der im Erfassungsbereich der Bandwaage liegt, in diesem Zeitabschnitt schwerer. Dies liegt daran, dass in diesem Zeitabschnitt das Förderband läuft. Somit ist zu Beginn dieses Zeitabschnitts das Förderband in dem Bereich, in dem dessen Gewicht von der Bandwaage erfasst wird, unbeladen. Bei laufendem Förderband wird das Schüttgut durch die Bewegung des Förderbandes derart weiter befördert, dass ein zunehmender Teil des Förderbandes in dem Bereich, in dem das Gewicht des Förderbandes von der Bandwaage erfasst wird, mit Schüttgut beladen ist. Daraus resultiert der Anstieg des Mittelwertes in dem Zeitbereich zwischen t=d und t=g.

Im Zeitpunkt t=g ist das Förderband in dem Bereich, in dem dessen Gewicht von der Bandwaage erfasst wird, mit Schüttgut beladen. Wenn die Menge Schüttgut, die pro Zeiteinheit auf das Förderband geladen wird, konstant ist, ist dann auch bei laufendem Förderband der von der Bandwaage gemessene gemittelte Wert des Gewichtes konstant. Auch bei stehender Bandwaage bleibt der gemessene gemittelte Wert des Gewichtes konstant. Dies gilt auch dann, wenn an der Ladestelle weiter Schüttgut auf das Förderband fällt und dieses Schüttgut dort überläuft. Diese Ladestelle liegt durchweg außerhalb des Erfassungsbereiches der Bandwaage, so dass das gemittelte Gewicht im Erfassungsbereich der Bandwaage bei stehendem Förderband konstant bleibt.

In der Darstellung der Figur 2 ist um die punktierte Linie, die den gemittelten Wert des gemessenen Gewichtes des Förderbandes durch die Bandwaage darstellt, jeweils oberhalb und unterhalb eine strichlinierte Linie dargestellt.

Diese strichlinierten Linien stellen "Hüllkurven" dar für die Maximalwerte und die Minimalwerte im ungefilterten Signal der Bandwaage. Diese Hüllkurven definieren in den jeweiligen Zeitabschnitten die Amplituden der Schwingungen in dem ungefilterten Signal der Bandwaage in dem interessierenden Frequenzbereich.

In dem Zeitabschnitt von t=0 bis zum Zeitpunkt t=a steht das Förderband. Außerdem ist das Förderband leer in dem Bereich des Förderbandes, der von der Bandwaage erfasst wird. Das gemessene gemittelte Gewicht (punktierte Linie) in diesem Zeitabschnitt entspricht dem Leergewicht des Förderbandes. Die Schwingungen im ungefilterten Signal der Bandwaage in diesem Zeitabschnitt entsprechen den Schwingungen, die von anderen laufenden Antriebsmitteln des Systems auf das Förderband übertragen werden und damit dieses Förderband zu Schwingungen anregen.

Zum Zeitpunkt t=a wird das Förderband eingeschaltet und erreicht zum Zeitpunkt t=b seine Sollgeschwindigkeit. Zwischen den Zeitpunkten t=b und t=d läuft das Förderband mit seiner Sollgeschwindigkeit. Dabei ist das Förderband in diesem Zeitabschnitt in dem Bereich des Förderbandes, der von der Bandwaage erfasst wird, weiterhin leer.

Es ist zu sehen, dass die Hüllkurven um den gemessenen gemittelten Wert des Gewichtes des Förderbandes in diesem Zeitabschnitt weiter auseinander liegen und dass somit die Amplituden, mit denen das ungefilterte Signal der Bandwaage um diesen Mittelwert (gepunktete Linie) schwingt, in diesem Zeitabschnitt größer sind als in dem Zeitabschnitt zwischen t=0 und t=a, in dem das Förderband stillsteht.

Dies lässt sich damit erklären, dass das Förderband in diesem Zeitabschnitt zwischen t=b und t=d nicht nur durch die anderen Antriebsmittel des Systems zu Schwingungen angeregt wird sondern auch zusätzlich Schwingungen ausführt, weil das Förderband selbst in Betrieb ist und über den Antriebsmotor und die Umlenkrollen angetrieben wird.

Zwischen den Zeitpunkten t=d und t=g läuft der Teil des Förderbandes, der mit Schüttgut beladen ist, in den Bereich ein, in dem das Gewicht des Förderbandes von der Bandwaage erfasst wird.

Es hat sich hierbei gezeigt, dass die Amplituden der Schwingungen in dem interessierenden Frequenzbereich in dem ungefilterten Signal der Bandwaage mit zunehmendem Gewicht des Förderbandes abnehmen. Dies lässt sich damit erklären, dass die Schwingungen des Förderbandes mit zunehmendem Gewicht gedämpft werden.

In der Darstellung der Figur 2 sind die Hüllkurven so dargestellt, als dass die Bandwaage vergleichsweise dicht bei der Ladestelle angeordnet ist. In der Realität besteht hier ein gewisser Abstand, damit das gemittelte Gewicht besser erfasst werden kann. Dies bedeutet, dass der gemittelte Wert des Gewichtes des Förderbandes im Erfassungsbereich der Bandwaage nach wie vor dem Gewicht des leeren Förderbandes entspricht, dass sich aber tatsächlich bereits Schüttgut auf dem Förderband befindet im Bereich zwischen der Ladestelle und dem Beginn des Erfassungsbereichs des Förderbandes durch die Bandwaage. Dieses Schüttgut auf dem Förderband bewirkt u. U. schon eine Dämpfung der Schwingungen des Förderbandes. In diesem Fall würden sich bereits zum Ende des Zeitabschnitts zwischen t=b und t=d die Amplituden der Schwingungen im ungefilterten Signal der Bandwaage verringern, obwohl dort nach wie vor der gemittelte Wert des Signals der Bandwaage für das Gewicht der Bandwaage im Erfassungsbereich der Bandwaage nach vor den Wert des unbeladenen Förderbandes anzeigt. Die obere und die untere Hüllkurve würden in diesem Fall am Ende dieses Zeitabschnitts nicht horizontal verlaufen sondern aufeinander zu laufen.

Entsprechend kann ein Zeitverzug auch eintreten, wenn der gemittelte Wert des Gewichtes des Förderbandes im Erfassungsbereich der Bandwaage konstant dem Wert eines beladenen Förderbandes entspricht und an der Ladestelle kein weiteres Schüttgut mehr auf das Band aufgebracht wird. Der gemittelte Wert des Gewichtes des Förderbandes im Erfassungsbereich der Bandwaage bleibt konstant bis der Teil des Förderbandes, auf dem sich kein Schüttgut mehr befindet, in diesen Erfassungsbereich einläuft. Erst dann wird die Reduzierung des Gewichtes des Förderbandes von der Bandwaage gemessen, obwohl das Förderband insgesamt bereits vorher leichter wurde. In dieser Konstellation ist zu erwarten, dass die Amplituden der Schwingungen bereits wieder größer werden, bevor im Erfassungsbereich der Bandwaage eine Reduzierung des Gewichtes des Förderbandes messbar wird.

Es ist zu sehen, dass in den Zeitabschnitten zwischen t=g und t=i bei einem Förderband, das beladen ist und läuft die Amplituden wiederum höher sind als in dem Zeitabschnitt zwischen t=j und t=k, in dem das Förderband steht. Zwischen den Zeitpunkten t=i und t=j verlangsamt sich das Förderband und kommt zum Zeitpunkt t=j zum Stehen.

Es ist zu sehen, dass die Amplituden im ungefilterten Signal der Bandwaage bei beladenem Förderband geringer sind als bei unbeladenem Förderband.

Damit lässt sich der Grenzwert der Amplitude bzw. der Schwellwert der Leistungsdichte für ein System dann allgemeingültig und unabhängig vom Beladungszustand des Förderbandes definieren, wenn sich die Amplituden im ungefilterten Signal bzw. die Leistungsdichten im relevanten Frequenzbereich so darstellen, dass
für den Betriebszustand I "Förderband leer" und "Förderband steht" die sich
ergebenden Amplituden bzw. Leistungsdichten im relevanten Frequenzbereich eindeutig kleiner sind als
die sich ergebenden Amplituden bzw. Leistungsdichten im relevanten
   Frequenzbereich für den Betriebszustand II "Förderband läuft" und "Förderband
   ist beladen".

Wenn dies der Fall ist, lässt sich bereits darüber der Grenzwert der Amplitude bzw. der Schwellwert der Leistungsdichte im interessierenden Frequenzbereich definieren. Sind die Amplituden bzw. die Leitungsdichten im interessierenden Frequenzbereich für den Betriebszustand I nicht eindeutig kleiner als für den Betriebszustand II, kann eine entsprechende Information ausgegeben werden, dass ein Tachorad installiert werden sollte. Alternativ zur Ausgabe dieser Information ist es dann möglich, einen weiteren Versuch der Kalibrierung zu machen, bei dem eine Parametrierung über das Gewicht des Förderbandes erfolgt.

Der weitere Versuch der Kalibrierung kann vorgenommen werden, indem folgende Messung durchgeführt wird:
Bei beladenem Förderband wird versucht, den Grenzwert der Amplitude bzw. den Schwellwert der Leistungsdichte für ein System dann für diesen Betriebszustand des beladenen Förderbandes zu definieren, wenn sich die Amplituden im ungefilterten Signal bzw. die Leistungsdichten im relevanten Frequenzbereich so darstellen, dass
   für den Betriebszustand III "Förderband ist beladen" und "Förderband steht" die sich ergebenden Amplituden bzw. Leistungsdichten im relevanten Frequenzbereich
eindeutig kleiner sind als
   die sich ergebenden Amplituden bzw. Leistungsdichten im relevanten Frequenzbereich für den Betriebszustand II "Förderband läuft" und "Förderband ist beladen".
Wenn dies der Fall ist, lässt sich darüber der Grenzwert der Amplitude bzw. der Schwellwert der Leistungsdichte im interessierenden Frequenzbereich für den Betriebszustand des beladenen Förderbandes definieren. Im laufenden Betrieb des Systems kann zunächst unterschieden werden, ob der Betriebszustand "Förderband ist beladen" oder "Förderband ist leer" vorliegt. Dies ergibt sich aus dem gefilterten Signal der Bandwaage. Wenn im laufenden Betrieb des Systems festgestellt wird, dass der Betriebszustand "Förderband ist beladen" vorliegt, kann mit dem für diesen Betriebszustand ermittelten Grenzwert der Amplitude bzw. Schwellwert der Leistungsdichte aus dem ungefilterten Signal der Bandwaage abgeleitet werden, ob das Förderband steht oder läuft.

Sind die Amplituden bzw. die Leitungsdichten im interessierenden Frequenzbereich für den Betriebszustand III nicht eindeutig kleiner als für den Betriebszustand II, kann eine entsprechende Information ausgegeben werden, dass ein Tachorad installiert werden sollte.

Ergänzend kann eine weitere Kalibrierung (zusätzlich zu der Kalibrierung für den Betriebszustand "Förderband ist beladen) vorgenommen werden für den Betriebszustand "Förderband ist leer". Dies kann erfolgen, indem Folgendes gemessen wird:
Bei leerem Förderband wird versucht, den Grenzwert der Amplitude bzw. den Schwellwert der Leistungsdichte für ein System dann für diesen Betriebszustand des leeren Förderbandes zu definieren, wenn sich die Amplituden im ungefilterten Signal bzw. die Leistungsdichten im relevanten Frequenzbereich so darstellen, dass
   für den Betriebszustand I "Förderband ist leer" und "Förderband steht" die sich
   ergebenden Amplituden bzw. Leistungsdichten im relevanten Frequenzbereich eindeutig kleiner sind als
   die sich ergebenden Amplituden bzw. Leistungsdichten im relevanten
      Frequenzbereich für den Betriebszustand IV "Förderband läuft" und "Förderband ist leer".

Wenn dies der Fall ist, lässt sich darüber der Grenzwert der Amplitude bzw. der Schwellwert der Leistungsdichte im interessierenden Frequenzbereich für den Betriebszustand des leeren Förderbandes definieren. Im laufenden Betrieb des Systems kann zunächst unterschieden werden, ob der Betriebszustand "Förderband ist beladen" oder "Förderband ist leer" vorliegt. Dies ergibt sich aus dem gefilterten Signal der Bandwaage. Wenn im laufenden Betrieb des Systems festgestellt wird, dass der Betriebszustand "Förderband ist leer" vorliegt", kann mit dem für diesen Betriebszustand ermittelten Grenzwert der Amplitude bzw. Schwellwert der Leistungsdichte aus dem ungefilterten Signal der Bandwaage abgeleitet werden, ob das Förderband steht oder läuft.

Bei den weiteren Kalibrierungsversuchen kann aus den ermittelten Grenzwerten der Amplituden bzw. Schwellwerten der Leistungsdichten im interessierenden Frequenzbereich zu den beiden Betriebszuständen "Förderband ist leer" und "Förderband ist beladen (mit einem Gewicht G)" für ein aktuell gemessenes Gewicht G' des Förderbandes, das aus dem gefilterten Signal der Bandwaage abgeleitet wird, der für dieses Gewicht G' anzuwendende Grenzwert der Amplitude durch eine Interpolation (beispielsweise eine lineare Interpolation) aus dem Grenzwert für das unbeladene Förderband und dem Grenzwert für das mit dem Gewicht G beladene Förderband ermittelt werden bzw. der für dieses Gewicht G' anzuwendende Schwellwert der Leistungsdichte im interessierenden Frequenzbereich durch eine Interpolation (beispielsweise eine lineare Interpolation) aus dem Schwellwert der Leistungsdichte im interessierenden Frequenzbereich für das unbeladene Förderband und dem Schwellwert der Leistungsdichte im interessierenden Frequenzbereich für das mit dem Gewicht G beladene Förderband ermittelt werden.

Sind die Amplituden bzw. die Leitungsdichten im interessierenden Frequenzbereich für den Betriebszustand I nicht eindeutig kleiner als für den Betriebszustand IV, kann eine entsprechende Information ausgegeben werden, dass ein Tachorad installiert werden sollte.

Typische Werte der Frequenzen des höherfrequenten Signalanteils, können im Bereich von ca. 100 Hz liegen, hängen jedoch vom Schwingungsverhalten des Stahlbaus der Anlage ab sowie den Drehzahlen von Antriebsmitteln, die in dem System vorhanden sind. Es ist insbesondere zu beachten, dass bei einem stehenden Förderband nicht gleichzeitig auch die anderen Antriebsmittel abgeschaltet sind. Beispielsweise können vorhandene Mühlen zur Zerkleinerung von Steinen weiterlaufen oder auch andere vorhandene Antriebsmittel. Diese Antriebsmittel regen das System zu Schwingungen an, die sich auch auf das Förderband übertragen. Deswegen kommt es auch bei stehendem Förderband zu Schwingungen.

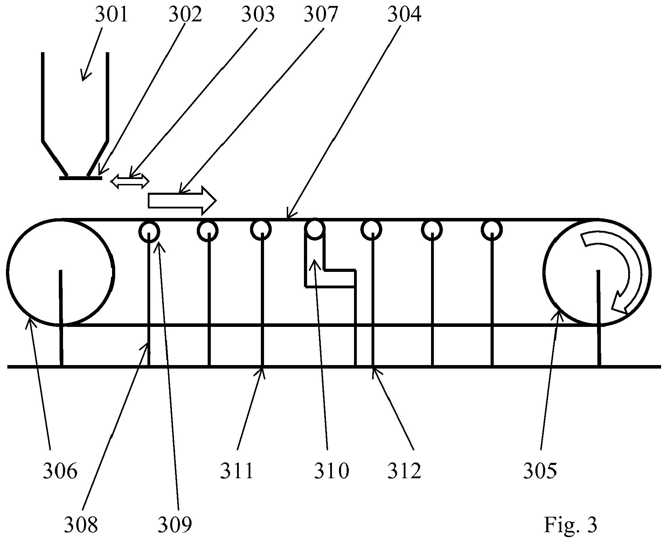

Figur 3 zeigt eine Prinzipdarstellung eines Förderbandes mit einer Ladestelle 301 und einer Bandwaage 310.

Die Ladestelle 301 besteht aus einem Vorratsbehälter 301, der mit einem Schieber 302 entsprechend der Pfeilrichtung 303 geöffnet und geschlossen werden kann.

An der Ladestelle 301 fällt bei geöffnetem Schieber 302 Schüttgut auf das Förderband 304. Dieses Förderband 304 wird von einer motorisch angetriebenen Umlenkrolle 305 angetrieben Es handelt sich um ein endlos umlaufendes Förderband 304, das über eine zweite Umlenkrolle 306 läuft, die nicht angetrieben ist.

Beim Betrieb des Förderbandes 304 wird dieses Förderband in Richtung des Pfeiles 307 bewegt. Dadurch wird das Schüttgut von der Ladestelle 301 weg bewegt.

Es ist weiterhin zu sehen, dass das Förderband zwischen den beiden Umlenkrollen 305 und 306 Stützrollen aufweist. Eine dieser Stützrollen ist mit der Bezugsziffer 309 bezeichnet. Die Kräfte, die von dieser Stützrolle aufgenommen werden, werden über die Stütze 308 abgetragen. Dadurch wird das Förderband gestützt, so dass diese nicht zwischen den beiden Umlenkrollen 304 und 305 in Folge der Gewichtsbelastung durchhängt.

Es ist weiterhin eine Bandwaage 310 zu sehen. Diese Bandwaage ist im Zusammenhang mit Figur 1 in einem Ausführungsbeispiel erläutert. Mit dieser Bandwaage wird das Gewicht des Förderbandes und des darauf aufliegenden Schüttgutes zwischen den beiden Stützrollen 311 und 312 gemessen. Schüttgut sowie das Eigengewicht des Förderbandes selbst, das sich nicht zwischen diesen beiden Stützrollen 311 und 312 befindet, wird von der Bandwaage praktisch überhaupt nicht erfasst, weil die daraus resultierenden Gewichtskräfte über die anderen Stützrollen abgetragen werden und damit an der Bandwaage 310 nicht messbar sind.

In der Bewegungsrichtung 307 des Förderbandes 304 besteht ein Abstand zwischen der Ladestelle 301 und der Stützrolle 311, die den Eingangspunkt des Bereichs definiert, in dem das Förderband mit dem darauf befindlichen Schüttgut von der Bandwaage erfasst wird. Entsprechend wird Schüttgut, das sich auf dem Förderband befindet, nicht mehr von der Bandwaage erfasst, wenn dieses wegen der Bewegung des Förderbandes die Stützrolle 312 passiert hat.

Wird beispielsweise bei leerem Förderband 304 das Förderband 304 in Betrieb genommen und die Ladestelle 301 geöffnet, zeigt das gefilterte Signal der Bandwaage 310 zunächst weiterhin den Wert "0" an, obwohl sich bereits Schüttgut auf dem Förderband 304 befindet. Erst wenn der Teil des Förderbandes, auf dem das Schüttgut aufliegt, die Stützrolle 311 passiert hat, zeigt das gefilterte Signal der Bandwaage 310 zunehmend das Gewicht des Schüttgutes an, bis sich auf der gesamten Länge des Förderbandes 304 zwischen den Stützrollen 311 und 312 Schüttgut befindet.

## Patentansprüche

1. Verfahren zur Prüfung eines Systems bestehend aus einem Förderband (304) zum Transport von Schüttgütern, einer dem Förderband (304) zugeordneten Bandwaage (1, 310) sowie einer Ladestelle (301) zum Laden des Förderbandes (304) mit Schüttgütern sowie einer Entladestelle zum Entladen der Schüttgüter von dem Förderband (304), wobei eine Prüfung des Betriebszustandes des Förderbandes (304) erfolgt,
**dadurch gekennzeichnet, dass** eine Auswertung des Signals der Bandwaage (1, 310) im Hinblick auf Schwingungen im Signal der Bandwaage erfolgt.

2. Verfahren nach Anspruch 1,
**dadurch gekennzeichnet, dass** die Amplitude der Signalschwingungen in einem Zeitfenster in einem Frequenzbereich ausgewertet wird derart, dass bei Überschreiten eines Grenzwertes der Amplitude der Signalschwingung in dem Frequenzbereich abgeleitet wird, dass das Förderband (304) läuft (b**←→**d**;** d**←→**g**,** g**←→**i**)** und dass bei Unterschreiten des Grenzwertes der Amplitude abgeleitet wird, dass das Förderband steht (**→**a; j**←→**k)**.**

3. Verfahren nach Anspruch 1,
**dadurch gekennzeichnet, dass** ein Leistungsdichtespektrum in einem Zeitfenster aufgenommen wird, wobei die Leistungsdichte in einem Frequenzbereich ausgewertet wird, in dem Schwingungen des Förderbandes auftreten, wobei bei Überschreiten eines Schwellwertes der Leistungsdichte in diesem Frequenzbereich erkannt wird, dass das Förderband läuft und bei Unterschreiten dieses Schwellwertes erkannt wird, dass das Förderband steht.

4. Verfahren nach einem der vorhergehenden Ansprüche,
**dadurch gekennzeichnet, dass** für ein bestimmtes System eine Kalibrierung vorgenommen wird, indem ein Signalverlauf des Signals der Bandwaage (1, 310) bei stehendem Förderband (304) des Systems aufgenommen wird und indem ein Signalverlauf des Signals der Bandwaage (1, 310) bei laufendem Förderband (304) des Systems aufgenommen wird.

5. Verfahren nach Anspruch 4 in weiterer Rückbeziehung auf einen der Ansprüche 2 oder 3,
**dadurch gekennzeichnet, dass** der Grenzwert der Amplitude und / oder der Schwellwert der Leistungsdichte abhängig von der ermittelten Amplitude und / oder der ermittelten Leistungsdichte bei stehenden Förderband (304) sowie abhängig von der ermittelten Amplitude und / oder der ermittelten Leistungsdichte bei laufendem Förderband (304) festgelegt wird.

6. Verfahren nach einem der Ansprüche 1 bis 5,
**dadurch gekennzeichnet, dass** aus dem Signalverlauf des Signals der Bandwaage (1, 310) auf die Fördergeschwindigkeit des Förderbandes (304) geschlossen wird.
